# EUROPEAN PATENT SPECIFICATION

(11) **EP 0 368 522 B1**
(45) Date of publication and mention of the grant of the patent: **09.02.1994**
(21) Application number: 89311122.9
(22) Date of filing: 27.10.1989
(51) Int. Cl.: B60J 10/06, B60J 10/04, B60R 13/04

(54) **Weather strip retaining system**
Vorrichtung zur Halterung eines Dichtungsprofils
Système de fixation pour une bande d'étanchéité

(30) Priority: 09.11.1988 US 269132
(43) Date of publication of application: 16.05.1990
(73) Proprietor: THE STANDARD PRODUCTS COMPANY, Cleveland Ohio 44102 (US)
(72) Inventor: Vaughan, Robert Albert, Dearborn Michigan 48124 (US)
(74) Representative: Jones, Michael Raymond

(56) References cited:
- CA-A- 596 278
- DE-A- 3 140 140
- GB-A- 779 867
- US-A- 2 733 097
- US-A- 4 696 128

## Description

The present invention relates to automotive weather stripping and, more particularly, to an improved glass run channel and/or belt weather stripping retaining system.

Weather stripping is used in the automotive industry to seal components such as windows, doors, trunks, engine compartments or the like. Generally, the weather stripping is secured to a flange projecting from the component which is to be sealed. Designers strive to design weather stripping which requires a minimal force to position the weather stripping onto the flange and requires a substantial resistive withdrawal force to remove the weather stripping from the flange. Several different types of weather stripping retaining systems exist in the art.

Systems which exist in the field are illustrated by the following U.S. patents. The systems are: U.S. Patent Nos. 1,896,632, issued February 7, 1933 to Ledwinka; 2,695,191, issued November 23, 1954 to Naughton, Jr.; 4,072,340, issued February 7, 1978 to Morgan; 4,139,234, issued February 13, 1979 to Morgan; 4,696,128, issued September 29, 1987 to Fukuhara; Australian Patent No. 264,563; German examined patent application No. 1,148,888; French Patent Nos. 626,648 and 2,384,655; and Japanese Patent No. 58-33520. It should be noted that the list of patents is not exhaustive of the different types of retaining systems that exist in the field.

As used herein, the term weather stripping is intended to cover, inter alia, the elongate section, normally extruded and of uniform cross-section along its length, which seals an opening in a vehicle body to isolate the interior of the vehicle from external factors such as the weather. Thus, the weather stripping may seal any opening such as a door opening, a window opening (fixed - as in the case of a windscreen, or movable - as in the case of a vertically movable pane of glazing material), or a boot opening. The weather stripping may include a rigid reinforcing element normally made of a metal which may be solid or flexible - i.e. provided with apertures which enhance flexibility. The reinforcing element may be covered with an elastomeric material such as a rubber or a plastics material. The weather stripping may include portions intended to perform specific functions; thus, a weather stripping which fits around a window opening in a door will also include, or have associated with it, a glass run channel portion.

According to the present invention, there is provided a system for attaching automotive weather stripping on a vehicle flange, comprising:
weather stripping adapted to be secured on said flange of the vehicle, said weather stripping including retaining means for retaining said weather stripping on said flange; and
one or more discontinuities on said flange, said one or more discontinuities coupled with said weather stripping retaining means for enhancing the retention of said weather stripping on said flange;
characterised in that said retaining means is integral with said weather stripping.

The present invention provides the art with an improved glass run channel and belt weather stripping retaining system. The present invention provides a glass run channel or belt weather stripping system that is easily positioned onto a flange or the like. The weather stripping requires a substantial withdrawal force to remove the weather stripping from the flange.

Preferably, the weather stripping comprises a channel capable of being received on the flange, the channel having two side walls connected by a base. The retaining means includes one or more members, extending from one of the walls of the channel. The member should be capable of flexing in one direction about its root with the side wall.

The one or more discontinuities in the flange may each be an elongated slot which is either an indentation partially through the thickness of the flange or an aperture through the entire thickness of the flange. These slots are capable of engaging the retaining members provided on the weather stripping.

For a better understanding of the present invention, and to show how the same may be carried into effect, reference will now be made, by way of example only, to the accompanying drawings in which:
Figure 1 illustrates a side view of an automobile including a weather stripping retaining system in accordance with the present invention;
Figure 2 is an enlarged side view of the weather stripping system with a portion broken away;
Figure 3 is a horizontal cross-section taken along the plane defined by the line 3-3 thereof;
Figure 4 is a horizontal cross-section like that of Figure 3 of a second embodiment in accordance with the present invention; and
Figure 5 is a vertical cross-section through the belt weather stripping taken along the plane defined by the line 5-5 thereof.

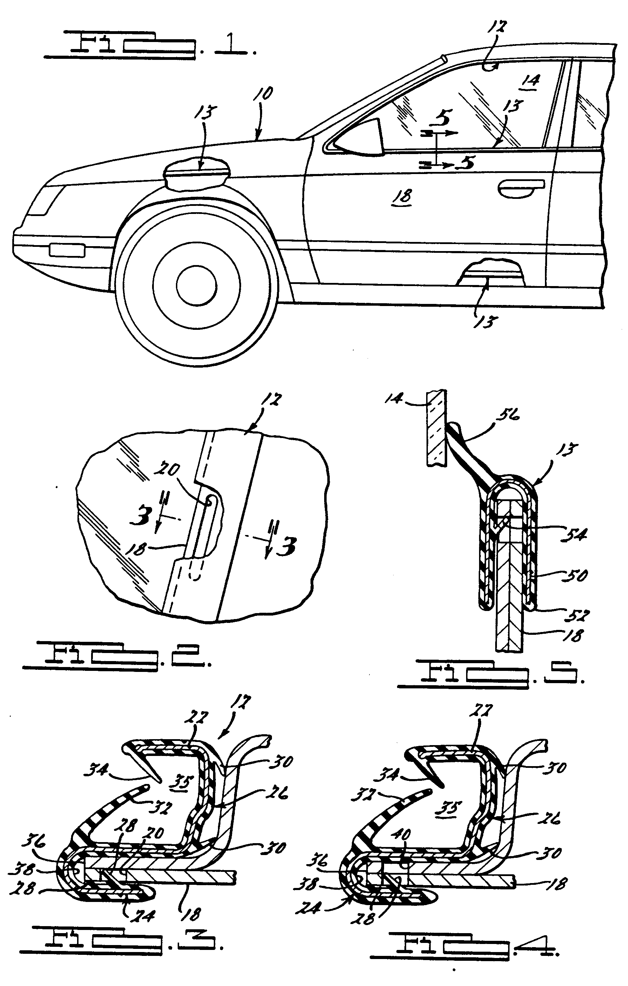

Turning to the Figures, particularly Figure 1, an automobile 10 is illustrated with weather stripping 12 and 13. The weather stripping 12, of the glass run variety, may be mounted about the periphery of the window opening 14 on a door 16. Also, the weather stripping 13, of the belt variety, may be utilized on the trunk, engine compartment, door or the like wherever belt weather stripping is conventionally utilized.

The retaining system includes the weather stripping 12 or 13 and a flange 18. The flange 18 is generally formed during the stamping process of the door or the like. The flange 18 is comprised of two pieces of parallel metallic material that are joined together, by welding or the like, as illustrated in Figures 3 through 5. The flange 18 extends from the component a desired distance to enable weather stripping to be attached thereto.

The flange 18 includes one or more discontinuities 20 to enhance retention of the weather stripping 12 and 13. The discontinuities 20 are positioned at desired spaced locations about the flange 18. The spacing is such that the weather stripping 12 and 13 is easily positioned onto the flange 18 and requires a substantial withdrawal force to remove the weather stripping 12 and 13 from the flange 18. The discontinuities 20 may be elongated slots, like that shown in Figure 2. The slots are generally cut through one thickness of the two thickness flange 18.

Generally, the glass run weather stripping 12 includes a metallic reinforcement member 22. The reinforcement member 22 may be formed from flexible wire, lanced or perforated metal cores or a solid metal core as shown. The reinforcement member 22 includes a U-shaped channel portion 24 to fit about the flange 18. The reinforcement member 22 is covered with a polymeric skin 26 which surrounds the interior and exterior of the metallic member 22. Generally, the skin 26 includes polymeric retention members 28 to retain the flange 18 within the U-shaped channel portion 24. Also, sealing members 30 extend from the skin 26 on the exterior of the reinforcement member 22 to seal the door 16. In Figure 3, member 32 and 34 act to receive and seal a window which is positioned in a channel 35 within the weather stripping 12.

The U-shaped portion 24 of the glass run weather stripping reinforcement member 22 is positioned onto the flange 18. The weather stripping 12 is easily slid onto the flange 18 such that the free depending end 36 of the flange 18 moves toward the closed end 38 of the U-shaped channel 24. As this occurs, a retention member 28 moves into the discontinuity of the flange 18, as shown in Figure 3.

Once it is attempted to remove the weather stripping 12 from the flange 18, the retention members 28 exhibit excellent retention characteristics to retain the weather stripping 12 onto the flange 18. As the weather stripping 12 is removed from the flange 18, the retention members 28 flex back upon themselves within the discontinuity 20 to exert a retaining force by the weather stripping 12 onto the flange 18. Once a threshold force has been exerted on the weather stripping 12 to overcome the retaining force, the retention member 28 gives and moves underneath the discontinuity 20, out from within the discontinuity 20, to enable removal of the weather stripping 12 from the flange 18.

Figure 4 illustrates another embodiment of the present invention. In Figure 4, the weather stripping 12 is substantially the same as that illustrated in Figure 3 and the reference numerals which are the same will be marked as such. The one or more discontinuities 20 of Figure 4 are elongated aperture 40 that extends through the two thicknesses of the flange 18. The aperture 40 provides the flange 18 with the same retention characteristics as explained herein.

Figure 5 illustrates a cross-section view of the belt weather stripping 13. The belt weather stripping 13 is similar to that previously described. However, the belt weather stripping 13 incudes only a U-shaped reinforcement member 50. The U-shaped reinforcement member is similar to that previously described. Also, the belt weather stripping includes a polymeric skin 52 with retention members 54 to retain the flange 18 within the U-shaped reinforcement member as explained above. Optional sealing members 56 may be included on the belt weather stripping 13.

## Claims

1. A system for attaching automotive weather stripping (12, 13) on a vehicle flange (18), comprising:
weather stripping (12, 13) adapted to be secured on said flange (18) of the vehicle, said weather stripping (12, 13) including retaining means (28, 54) for retaining said weather stripping (12, 13) on said flange (18); and
one or more discontinuities (20) on said flange (18), said one or more discontinuities (20) coupled with said weather stripping retaining means (28, 54) for enhancing the retention of said weather stripping (12, 13) on said flange (18);
characterised in that said retaining means (28, 54) is integral with said weather stripping (12, 13).

2. A system according to claim 1, wherein said weather stripping (12, 13) comprises a channel (24) capable of being received on said flange (18), said channel (24) comprising two side walls connected by a base (38), and wherein said retaining means (28, 54) includes one or more members extending from one of the walls of the channel (24).

3. A system according to claim 1 or 2, wherein said one or more discontinuities (20) in said flange (18) include one or more elongated slots in said flange (18).

4. A system according to claim 3, wherein said one or more elongated slots form indentations partially through the thickness of said flange (18).

5. A system according to claim 3, wherein said one or more elongated slots form apertures (40) in said flange (18).

6. A system according to claim 2 or any one of claims 3 to 5 when appendant to claim 2, wherein said one or more discontinuities (20) include one or more elongated slots, said one or more members engaging said one or more elongated slots for retaining said weather stripping (12, 13) on said flange (18).

7. A system according to any of claims 1 to 6, wherein said flange (18) extends inwardly and defines a window opening.

## Patentansprüche

1. Vorrichtung für die Befestigung eines Dichtungsprofils (12, 13) für ein Automobil an einer Fahrzeugflanke (18) mit:
einem an der Flanke (18) des Fahrzeugs befestigbaren Dichtungsprofil (12, 13), welches Halterungseinrichtungen (28, 54) für die Halterung des Dichtungsprofils (12, 13) auf der Flanke (18) aufweist; und
einer oder mehreren Unterbrechungen (20) auf der Flanke (18), die mit den Dichtungsprofil-Halterungseinrichtungen (28, 54) verbunden sind, um die Halterung des Dichtungsprofils (12, 13) auf der Flanke (18) zu verstärken;
dadurch gekennzeichnet, daß die Halterungseinrichtungen (28, 54) einteilig mit dem Dichtungsprofil (12, 13) ausgebildet sind.

2. Vorrichtung nach Anspruch 1, worin das Dichtungsprofil (12, 13) einen Kanal (24) aufweist, der von der Flanke (18) aufgenommen werden kann und der zwei durch ein Grundteil (38) verbundene Seitenwände hat, und worin die Halterungseinrichtungen (28, 54) ein oder mehrere Elemente aufweisen, die sich von einem der Wände des Kanals (24) erstrecken.

3. Vorrichtung nach Anspruch 1 oder 2, worin die eine oder mehrere Unterbrechungen (20) in der Flanke (18) einen oder mehrere längliche Schlitze in der Flanke (18) aufweisen.

4. Vorrichtung nach Anspruch 3, worin der eine oder die mehreren länglichen Schlitze Einschnitte darstellen, die sich teilweise durch die Dicke der Flanke (18) erstrecken.

5. Vorrichtung nach Anspruch 3, worin der eine oder die mehreren länglichen Schlitze Öffnungen (40) in der Flanke (18) darstellen.

6. Vorrichtung nach Anspruch 2 oder nach einem der Ansprüche 3 bis 5, wenn diese von Anspruch 2 abhängig sind, worin die eine oder die mehreren Unterbrechungen (20) einen oder mehrere längliche Schlitze aufweisen, wobei das eine oder die mehreren Elemente in Eingriff treten mit dem einen oder den mehreren länglichen Schlitzen, um das Dichtungsprofil (12, 13) auf der Flanke (18) zu halten.

7. Vorrichtung nach einem der Ansprüche 1 bis 6, worin die Flanke (18) sich nach innen erstreckt und eine Fensteröffnung definiert.

## Revendications

1. Système pour fixer des bandes d'étanchéité d'automobile (12, 13) sur un flasque (18) de véhicule, comprenant :
- une bande d'étanchéité (12, 13) destinée à être fixée audit flasque (18) du véhicule, ladite bande d'étanchéité (12, 13) comprenant des moyens de retenue (28, 54) afin de maintenir ladite bande d'étanchéité (12, 13) sur ledit flasque (18); et
- une ou plusieurs discontinuités (20) sur ledit flasque (18), ladite discontinuité ou lesdites discontinuités (20) étant accouplées audit moyen de retenue de bande d'étanchéité (28, 54) pour améliorer la retenue de ladite bande d'étanchéité (12, 13) sur ledit flasque (18);
caractérisé en ce que ledit moyen de retenue (28, 54) est en une pièce avec ladite bande d'étanchéité (12, 13).

2. Système selon la revendication 1, dans lequel ladite bande d'étanchéité (12, 13) comprend un canal (24) pouvant être reçu sur ledit flasque (18), ledit canal (24) comportant deux parois latérales reliées par une base (38), et dans lequel ledit moyen de retenue (28, 54) comprend un ou plusieurs éléments s'étendant à partir de l'une des parois du canal (24).

3. Système selon la revendication 1 ou 2, dans lequel ladite discontinuité ou lesdites discontinuités (20) du flasque (18) comprennent une ou plusieurs fentes allongées ménagées dans ledit flasque (18).

4. Système selon la revendication 3, dans lequel ladite ou lesdites fentes allongées forment des entailles partiellement dans l'épaisseur dudit flasque (18).

5. Système selon la revendication 3, dans lequel ladite fente ou lesdites fentes allongées forment des ouvertures (14) partiellement dans ledit flasque (18).

6. Système selon la revendication 2 ou l'une quelconque des revendications 3 à 5 lorsqu'elle dépend de la revendication 2, dans lequel ladite discontinuité ou lesdites discontinuités (20) comprennent une ou plusieurs fentes allongées, ledit élément ou lesdits éléments sont engagés dans ladite fente ou lesdites fentes allongées afin de maintenir ladite bande d'étanchéité (12, 13) sur ledit flasque (18).

7. Système selon l'une quelconque des revendications 1 à 6, dans lequel ledit flasque (18) s'étend vers l'intérieur et définit une ouverture pour fenêtre.
